# EUROPÄISCHE PATENTSCHRIFT

(11) **EP 0 514 387 B1**
(45) Veröffentlichungstag und Bekanntmachung des Hinweises auf die Patenterteilung: **25.08.1993**
(21) Anmeldenummer: 91901745.9
(22) Anmeldetag: 17.12.1990
(51) Int. Cl.: E04H 6/14, B65G 1/127

(54) **VERTIKALE SPEICHERVORRICHTUNG, INSBESONDERE FÜR KRAFTFAHRZEUGE**
VERTICAL STORAGE DEVICE, IN PARTICULAR FOR MOTOR VEHICLES
DISPOSITIF DE STOCKAGE VERTICAL, NOTAMMENT POUR VEHICULE

(30) Priorität: 30.01.1990 DE 4002665
(43) Veröffentlichungstag der Anmeldung: 25.11.1992
(73) Patentinhaber: JOCHUM, Herbert M., D-83677 Greiling (DE)
(72) Erfinder: JOCHUM, Herbert M., D-83677 Greiling (DE)
(74) Vertreter: Lesser, Karl-Bolko, Dipl.-Ing.
(86) Internationale Anmeldenummer: EP9002210
(87) Internationale Veröffentlichungsnummer: WO9111576

## Beschreibung

Die Erfindung betrifft eine vertikale Speichervorrichtung, insbesondere für Kraftfahrzeuge, gemäß Oberbegriff des Anspruches 1.

Aus der DE-A-2 063 232 ist eine Speichervorrichtung bekannt. Weiterhin wird auf die DE-A-1 903 917, die DE-A-2 051 280 und die DE-A-2 161 868 verwiesen, in denen weitere Einzelheiten der aus der DE-A-2 063 232 bekannten Speichervorrichtung beschrieben sind bzw. aus denen alternative Ausführungen der allgemeinen Ausbildung einer solchen Speichervorrichtung bekannt sind.

Gemäß der DE-A-2 063 232 weist eine bekannte vertikale Speichervorrichtung einen vertikal stehenden, aus zwei miteinander verbundenen, vertikal stehenden Tragsäulen gebildeten Rahmen auf. In jeder Tragsäule ist jeweils in zwei vertikalen Führungen eine endlose und antreibbare, umlaufende Kette aus einzelnen, jeweils über einen Gelenkbolzen miteinander verbundenen Kettengliedern angeordnet. Die jeweilige Kette ist sowohl am unteren offenen Ende, als auch am oberen offenen Ende der Führungen umlenkbar. Jedes zweite Kettenglied weist einen sich vom Rahmen weg nach außen erstreckenden Tragarm auf. Die beiden Ketten sind nun so angeordnet und werden so synchron bewegt, daß jeweils in gleicher Höhe jedes Kettentrums ein Tragarm vorgesehen ist. Zwei solcher Tragarme lagern pendelnd an ihren freien Enden durch horizontal liegende Speicherplattformen, an deren Längsenden Streben angeordnet sind, gebildete Gondeln.

Die Ketten werden hier durch eine Antriebs- und Trageinrichtung nicht nur bewegt, bondern auch in den Führungen gestützt. Einzelheiten dieser Antriebs- und Trageinrichtung sind in der DE-OS 1.903.917 beschrieben.

Eine solche bekannte Speichervorrichtung, wie im übrigen auch ähnliche bekannte Speichervorrichtungen für Fahrzeuge (vgl. z.B. DE-B-2 060 295 und DE-A-2 239 845) sind nun so aufgestellt, daß sich die gesamte Speichervorrichtung und damit alle Gondeln oberhalb der Erdoberfläche befinden. Dies ist zum Teil auch durch die Bauart bedingt, da Fahrzeuge nur in die unterste, dann mittig angeordnete Gondel einfahren können. Da gattungsgemäße Speichervorrichtungen z.B. mit mehr als zwanzig Gondeln gebaut werden, erreichen diese eine Bauhöhe von 25 m bis 30 m, was der Höhe eines acht- bis zehnstöckigen Hauses entspricht. Solche Bauhöhen sind auch in den Städten nicht überall zugelassen, weshalb sich solche Speichervorrichtungen bisher gegenüber z.B. herkömmlichen Parkhäusern nicht durchsetzen konnten.

Die Verwendung von Gondeln hat sich für Speichervorrichtungen, die im wesentlichen oberhalb des Einfahrtniveaus angeordnet sind, im Prinzip bewährt.

In der DE-A-3 437 720 wurde nun vorgeschlagen, den größten Teil dieser Speichervorrichtung unterhalb des Einfahrtniveaus zu legen, d.h., diese Speichervorrichtung im wesentlichen unterhalb der Erdoberfläche anzuordnen. Diese Speichervorrichtung steht in der Regel mindestens etwas mehr als zwei Gondelhöhen über dem Erdboden hervor, da aufgrund der Konstruktion in eine Gondel, die sich in der obersten Stellung befindet, nicht eingefahren werden kann. In diesem Bereich sind auch die technischen Details für den Benutzer der Speichervorrichtung sichtbar. In eine solche Gondel kann in ein und derselben Höhe vorwärts eingefahren und anschließend vorwärts wieder - auf der anderen Seite der Gondel - herausgefahren werden.

Aus der DE-A-2 221 484 ist eine Speichervorrichtung für Fahrzeuge bekannt, die auch größtenteils unterhalb des Erdbodens angeordnet ist. Bei dieser Speichervorrichtung müssen die Fahrzeuge jedoch, nachdem sie vorwärts eingefahren wurden, wieder rückwärts herausfahren. Dies bedeutet, daß sich im Falle des Herausfahrens des einen Fahrzeugs kein weiteres einzufahrendes Fahrzeug im Ein- und Ausfahrtsbereich befinden darf und außerdem außerhalb der Speichervorrichtung ausreichend Wendeplatz zur Verfügung stehen muß.

Aus der DE-A-2 239 845 ist nun eine Speichervorrichtung bekannt, deren Speicherplattform an zwei sich diagonal gegenüberliegenden Ecken senkrecht übereinanderliegend jeweils einen Tragbolzen und einen Fürungsbolzen aufweist. Der Fürungsbolzen ist an dem freien Ende des kürzeren Schenkels und der Tragbolzen an dem Schenkelschnittpunkt eines L-förmigen Flansches angeordnet, dessen längerer Schenkel an der Stirnseite der Speicherplattform angeordnet ist. Die Länge dieses längeren Schenkels entspricht der Breite der Stirnseite der Plattform. Ein solcher Flansch ist an jedem Längsende der Plattform angeordnet.

Ein Paar von Trag- und Führungsbolzen wird jeweils in der Senkrechten in einer Schiene gleitend auf- und in einer weiteren, davon horizontal beabstandeten Schiene vertikal abbewegt. Am oberen und unteren Ende der vertikalen Schienen sind diese jeweils über zwei bogenförmige Schienen miteinander verbunden, wobei der Tragbolzen in der weiter oben angeordneten bogenförmigen Schiene und der Führungsbolzen in der darunterliegenden Schiene geführt wird. Die Aus- und Wiedereinlenkung der beiden Bolzen aus der bzw. in die jeweils eine vertikale Führungsschiene erfolgt über jeweils eine Weiche. Weiterhin sind auf jeder Seite der Speicherplattform, in der Senkrechten den Schienen für den Tragbolzen unmittelbar benachbart, zwei Führungsschienen für eine Förderkette angeordnet, deren obere und untere Umlenkung jeweils über ein Rad erfolgt, wobei die Kette jeweils weiter von den Trag- bzw. Führungsbolzen beabstandet geführt wird, als im senkrechten Führungsbereich.

Im senkrechten Bereich greift eine spezielle Einrichtung der Kette an dem Tragbolzen der Speicherplattform an, während im oberen und unteren Umlenkbereich eine spezielle Einrichtung für die Bewegung der Speicherplattform in diesem Bereich vorgesehen ist. Die das Fahrzeug oder dergleichen tragende Speicherplattform ist also nicht immer mit der dem Tragen und Fördern dienenden Kette verbunden.

Die Ein- bzw. Ausfahrt eines Fahrzeuges kann bei dieser Speichervorrichtung nur auf bzw. von einer im senkrechten Teil der Führungsschienen geführten Speicherplattform erfolgen, d.h., weder in der obersten Position, noch in der untersten Position der Speicherplattform ist eine Ein-oder Ausfahrt möglich. Dabei muß ein Fahrzeug auf eine auf einer Seite befindlichen Speicherplattform vorwärts einfahren, diese Speicherplattform muß aber auf der anderen Seite stehen, damit ein Fahrzeug wieder vorwärts ausfahren kann. Dabei muß der Fahrer des Fahrzeuges entweder beim Aussteigen nach dem Einfahren oder beim Einsteigen vor dem Ausfahren zwischen seinem Fahrzeug und dem benachbarten Fahrzeug und zwischen seinem Fahrzeug und der dort sehr eng anschließenden Konstruktion der Speichervorrichtung gehen. Dabei kann er sehr leicht mit den mechanisch bewegten Teilen der Einrichtung in Bewegung kommen, was nicht nur eine Verletzungsgefahr, sondern auch die Verschmutzungsgefahr des Fahrers erhöht. Sind sogar noch Beifahrer beim Ein- und Aussteigen dabei, so erhöht sich das Risiko.

Gemäß der dortigen Darstellung ist davon auszugehen, daß auch diese Speichervorrichtung im wesentlichen oberhalb des Erdbodens aufgebaut wird, wenngleich ein Teil der Einrichtung, der etwa dem eineinhalbfachen des vertikalen Abstandes zweier Plattformen entspricht, unterhalb des Einfahrtniveaus angeordnet sein muß.

Aus der DE-A-3 801 211 ist eine Speichervorrichtung bekannt, die aus der Speichervorrichtung der DE-A-3 437 720 weiterentwickelt wurde. Dabei weisen die Speicherplattformen zwei Tragbolzen auf, die beidseits der Längsmittelachse der Speicherplattform diagonal versetzt sind. Dementsprechend sind auch die Ketten und die Führungen versetzt angeordnet. Die Ketten werden über Umlenkräder umgelenkt. Schräg nach unten gerichtete Lenkhebel nehmen das Drehmonent auf und verhindern ein Kippen der Speicherplattformen.

Diese dort gezeigte und beschriebene komplizierte Konstruktion hat sich jedoch nicht bewährt. Auch sind die Kosten für eine solche Speichervorrichtung zu hoch.

Aus der FR-A-1 267 314 ist eine vertikale Speichervorrichtung bekannt, bei der zwei, jeweils in zwei vertikalen Führungen geführte, endlose und antreibbare, umlaufende Ketten aus einzelnen miteinander über Bolzen verbundenen Kettengliedern angeordnet sind. Diesen Ketten sind sowohl oben, als auch unten um Umlenkräder umlenkbar.

An jedem dritten Bolzen der Ketten sind Führungsrollen angeordnet, die in den Führungen laufen. Weiterhin sind an diesem jeweils dritten Bolzen jeweils zwei Tragarme angelenkt, wobei die freien Enden zweier Tragarme, die an unterschiedlichen, benachbarten Bolzen angelenkt sind und mit den drei dazwischen liegenden drei Kettengliedern ein Dreieck bilden, drehbar einen Tragbolzen eines horizontal angeordneten Behälters lagern. Die Behälter weisen in der Längsmittelachse im Bereich der Oberkante des Behälters an jedem Ende je den von den Tragarmen der Ketten gelagerten Tragbolzen auf. An mindestens einem Tragbolzen des Behälters ist drehfest ein nach oben gerichteter Lenkhebel angeordnet, der im oberen und unteren Umlenkbereich der Ketten an einer Führung entlang läuft und das Drehmoment der hängenden Behälter in diesen Bereichen aufnimmt.

An den vier vertikalen Seitenkanten des Behälters sind jeweils im oberen und im unteren Bereich insgesamt acht Rollen angeordnet, die zumindest im vertikalen Bereich der Kette an bzw. in Führungen laufen. Die Führungen für diese Rollen sind im oberen und unteren Umlenkbereich der Ketten offen bzw. nicht vorhanden.

Kraftfahrzeuge können in dieser Speichervorrichtung aufgrund der Bauart nicht geparkt werden.

Der Erfindung liegt deshalb die Aufgabe zugrunde, gattungsgemäße, in einer Baugrube versenkte Speichervorrichtungen so fortzuentwickeln, daß diese im vom Benutzer zu befahrenden und zu betretenden Bereich von funktionellen Teilen der Speichervorrichtung frei sind und dadurch insbesondere ungefährlicher und leichter zu benutzen sind, d.h., Freundlicher in der Anwendung werden. Darüber hinaus soll die Speichervorrichtung auch einfacher ausgebildet, billiger herzustellen sein und in der Funktion sicherer sein, als die in der DE-A-3 801 211 beschriebene Speichervorrichtung.

Bei der Lösung dieser Aufgabe wird eine Speicherplattform benutzt, die der aus der DE-A-2 239 845 bekannten Speicherplattform ähnlich ist, d.h., es wird abweichend von der gattungsbildenden Speichervorrichtung keine hängende Gondel mehr verwendet. Darüber hinaus wird die aus den DE-A-2 063 232, DE-A-1 903 917, DE-A-2 051 280, DE-A-2 161 868 und DE-A-3 437 720 bekannte Führung der Ketten verwendet und nicht die zwischenzeitlich entwickelte Führung der Ketten gemäß der DE-A-3 801 211.

Bei der erfindungsgemäßen Speichervorrichtung weist jede Speicherplattform zwei Tragbolzen auf, die beide in der Längsmittelachse dieser Speicherplattform angeordnet sind und je in dem freien Ende eines Tragarmes einer der beiden Ketten drehbar gelagert sind, an jeder Speicherplattform ist mindestens ein nach unten gerichteter Lenkhebel drehfest gegenüber dieser festgelegt, der an seinem freien Ende eine Einrichtung zur Aufnahme des Drehmomentes der Speicherplattform zumindest im vertikalen Bereich der Speichervorrichtung aufweist, an jeder Speicherplattform ist mindestens in einer Ecke derselben eine Führungsrolle festgelegt, und im oberen und im unteren Umlenkbereich der Ketten jeweils Führungsschienen für die an der Speicherplattform angeordneten Führungsrollen angeordnet sind, die die Speicherplattform horizontal halten.Diese Speicherplattformen sind somit über zwei Tragarme angelenkt und immer mit den Ketten der Speichervorrichtung verbunden. Diese Tragarme sind als solches z.B. schon aus der DE-A-2 063 232 bekannt. Dort tragen sie allerdings die hängenden Gondeln. Auch bei der Speichervorrichtung der DE-A-3 801 211 sind schon Tragarme vorgesehen, dort sind die Tragbolzen der Speicherplattformen aber diagonal angeordnet und die Speicherplattformen werdenzumindest theoretisch - schon dadurch horizontal in den Tragarmen gehalten.

Die Speicherplattformen können nun mittels der Tragarme so in der Speichervorrichtung bewegt werden, daß eine oberste Speicherplattform das oberste Teil der Speichervorrichtung bildet. D.h., die Speichervorrichtung schließt oben mit der Oberfläche der obersten Speicherplattform ab. Es stehen keine funktionellen Teile mehr über diese Fläche hervor. Wird nun die Baugrube neben dieser Speicherplattform noch durch verschwenkbare Platten geschlossen, so ist für den Benutzer von der Speichervorrichtung nur eine ebene Fläche zu sehen, auf der er sein Fahrzeug in einem speziellen Bereich abstellen kann und soll (vgl. DE-A-3 801 211 vom gleichen Anmelder).

Gemäß einer bevorzugten Ausführungsform ist an mindestens zwei, vorzugsweise an allen vier Ecken der Speicherplattform jeweils eine Führungsrolle angeordnet. Wenngleich grundsätzlich eine Führungsrolle je Speicherplattform ausreichen würde, ist zumindest an jedem Längsende einer Speicherplattform, besser sogar in jeder Ecke derselben je eine Führungsrolle vorgesehen.

Dabei sollten die Achsen der Führungsrollen parallel zur Längsachse der Speicherplattform ausgerichtet sein.

Ein Paar dieser Führungsrollen wird im oberen und im unteren Umlenkbereich der Ketten jeweils in Führungsschienen geführt, wodurch auch in diesem Bereich die Speicherplattform horizontal gehalten werden kann.

Gemäß einer bevorzugten Ausführungsform sind diese Führungen in ihren Endbereichen mindestens viertelkreisförmig ausgebildet, wobei vorzugsweise dazwischen ein horizontaler Bereich eingeschlossen ist, in dem die Führungen zumindest auf der den Ketten zu gerichteten Seite offen sind.

Das frei Ende des einzelnen Lenkhebels ist mittig unterhalb der Speicherplattform angeordnet.

Dabei kann der Lenkhebel unmittelbar an der Speicherplattform festgelegt oder drehfest an dem Tragbolzen der Speicherplattform festgelegt sein.

Um nun eine Aufnahme des Drehmomentes zumindest im vertikalen Bereich der Speichervorrichtung zu gestatten, weist z.B. das freie, nach unten gerichtete Ende des Lenkhebels eine Einrichtung auf, die mit einer komplementär ausgebildeten Einrichtung an der darunterliegenden Speicherplattform in Eingriff bringbar ist.

Dabei kann die an dem freien Ende des Lenkhebels angeordnete Einrichtung eine Gabel und die komplementär ausgebildete Einrichtung an der darunterliegenden Speicherplattform ein Bolzen, vorzugsweise der Tragbolzen der Speicherplattform sein.

Vorzugsweise ist an dem unteren Ende des Lenkhebels midestens eine Führungsrolle angeordnet.

So kann die an dem freien Ende des Lenkhebels angeordnete Einrichtung eine Führungsrolle und die komplementär ausgebildeten Einrichtung an der darunterliegenden Speicherplattform eine V-förmige ausgebildete Vertiefung sein, die vorzugsweise in der Speicherplattform ausgebildet ist. Im vertikalen Bereich der Speichervorrichtung wird diese Führungsrolle in der V-förmigen Vertiefung gegen Ausschwenken gehalten und die einzelnen Speicherplattformen stützen sich gegenseitig ab. Im Umlenkbereich der Ketten werden die Führungsrollen zuerst zusätzlich und nach dem "Abheben" der umgelenkten Speicherplattform nur mehr durch die Führungen gehalten.

Die eine Rolle des Lenkhebels kann in vorzugsweise stetigen Führungsschienen geführt werden, die zwei zueinander parallele vertikale Abschnitte aufweisen, die unten und oben jeweils über einen etwa halbkreisförmigen Abschnitt miteinander verbunden sind.

An dem freien Ende der Lenkhebels können auch zwei Rollen angeordnet sein, wobei jeweils eine der beiden Rollen des Lenkhebels in Führungsschienen geführt wird, die jeweils mindestens im oberen und unteren Bereich der Speichervorrichtung zwei zueinander parallele vertikale Abschnitte aufweisen, die unten und oben jeweils über einen etwa halbkreisförmigen Abschnitt miteinander verbunden sind.

Diese zwei Rollen können zusätzlich zu der zuvor beschrieben Rolle, die in der V-förmigen Vertiefung zu liegen kommt, vorhanden sein, so daß sich im eigentlichen vertikalen Bereich Führungen für die Rollen erübrigen.

Die die Führungsrollen haltenden Führungen bestehen aus einem U-förmigen Profil.

Weitere Einzelheiten und Vorteile der Erfindung ergeben sich aus den Unteransprüchen und einem im folgenden anhand der Zeichnung beschriebenem Ausführungsbeispiel der Erfindung.

Es zeigt:

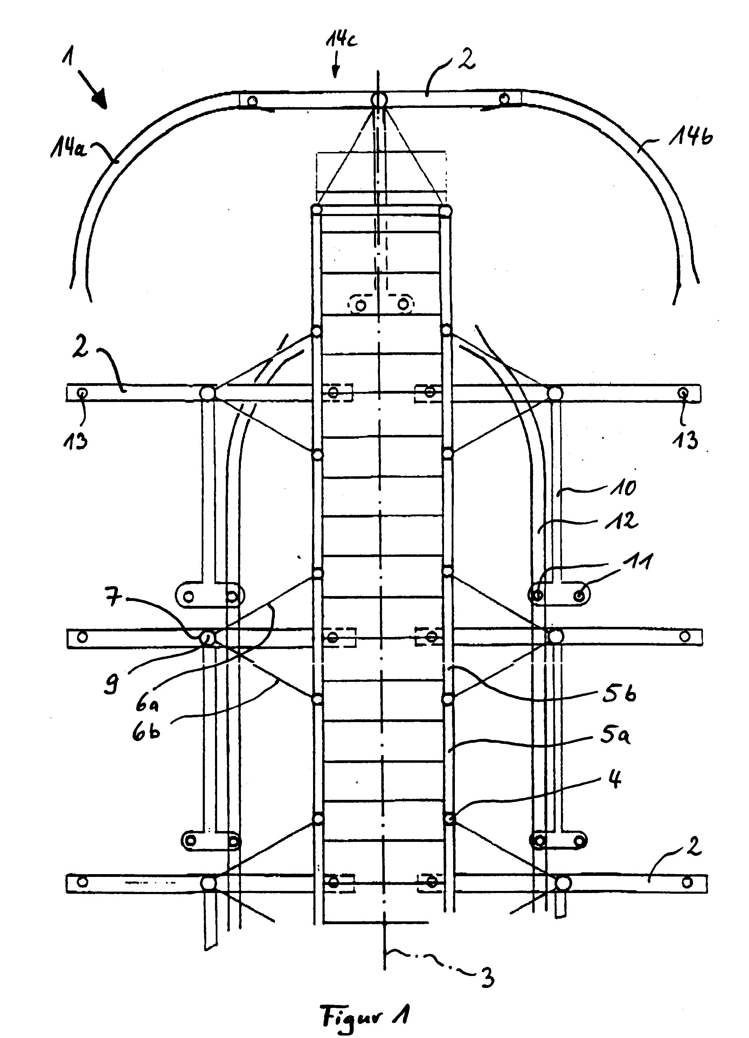

Figur 1 die wesentlichen Teile des oberen Bereichs einer in einer Baugrube versenkten Speichervorrichtung in Ein- und Ausfahrtsrichtung gesehen;
Figur 2 einige Bauteile der Speichervorrichtung gemäß Figur 1 quer zur Ein- und Ausfahrtsrichtung gesehen;

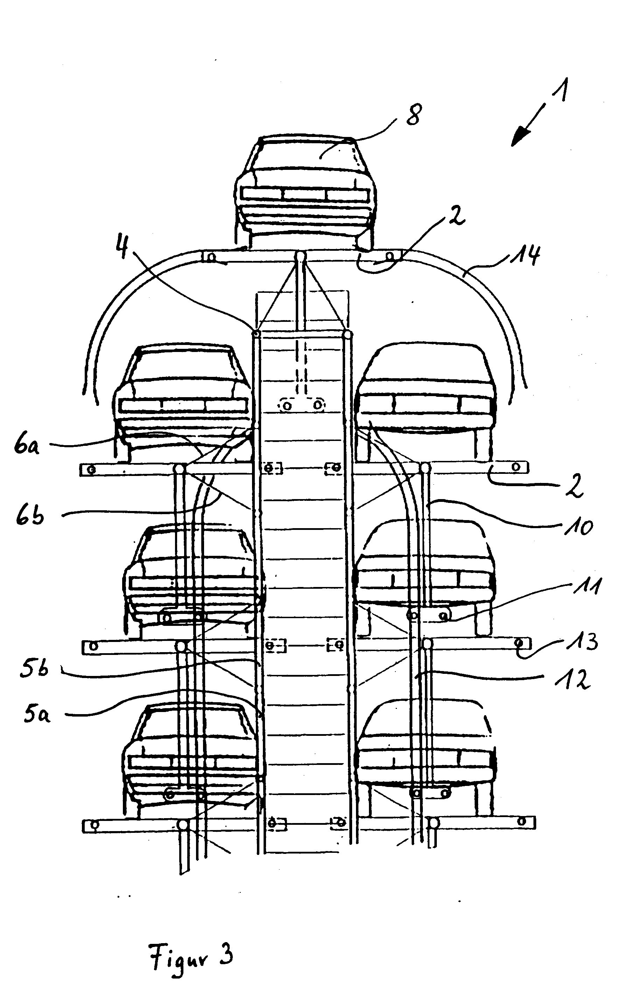

Figur 3 eine der Figur 1 entsprechende verkleinerte Ansicht mit gespeicherten Fahrzeugen, und

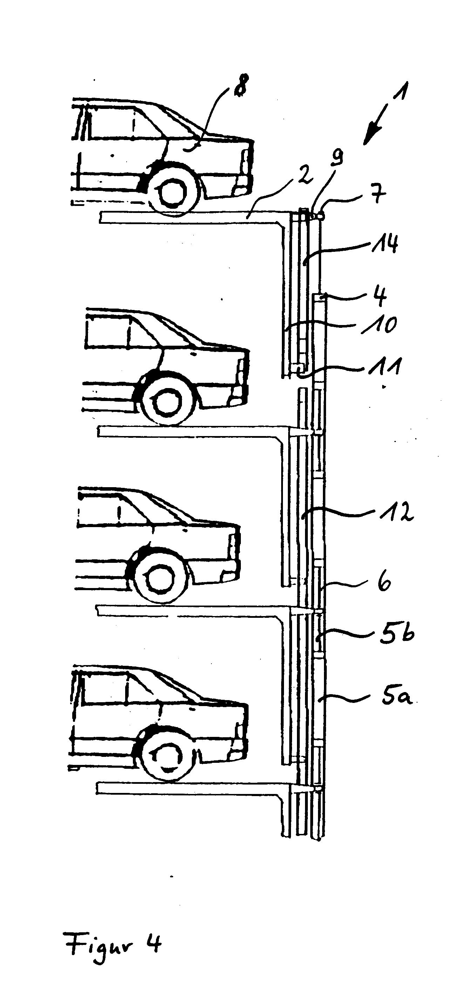

Figur 4 eine der Figur 2 entsprechende verkleinerte Ansicht mit gespeicherten Fahrzeugen.

Eine Speichervorrichtung 1 ist in einer nicht dargestellten Baugrube in einer solchen Tiefe angeordnet, daß die Oberfläche einer obersten Speicherplattform 2 der Vorrichtung 1 mit der Erdoberfläche abschließt, d.h., die gesamte Speichervorrichtung 1 liegt innerhalb dieser Baugrube. Oberhalb der Speichervorrichtung 1 und der Baugrube kann eine hier nicht dargestellte Überbauung sein. Dies kann ein größeres Gebäude sein, in das die Speichervorrichtung 1 integriert ist, es kann sich aber auch um eine einfache Überbauung handeln, in der lediglich die schließbare Zufahrtmöglichkeit für ein Fahrzeug in die Speichervorrichtung 1 vorgesehen ist.

Die Speichervorrichtung 1 weist zwei nicht dargestellte Tragsäulen auf, die einen Rahmen bilden und an denen die einzelnen im folgenden beschriebenen Bauteile festgelegt sind. Diese beiden Tragsäulen können auf dem Boden der Baugrube stehen und oben gegenüber der Baugrube noch seitlich abgestützt sein. Die beiden Tragsäulen können jedoch auch im oberen Bereich der Baugrube festgelegt sein und hängend gegebenenfalls über dem Boden der Baugrube schweben.

Diese beiden Tragsäulen sind voneinander so beabstandet, daß zwischen ihnen Speicherplattformen 2 der Länge nach Platz haben und für die weiteren mechanischen Teile ausreichend Raum vorhanden ist. Diese beiden Tragsäulen stehen in einer vertikalen Mittelebene 3 der Speichervorrichtung 1. In dieser Mittelebene 3 werden Fahrzeuge ein- und ausgefahren.

Jede dieser Tragsäulen weist zwei vertikale Führungen für Trag- und Führungsbolzen 4 einer jeder Tragsäule zugeordneten Kette 5 auf. Diese vertikalen Führungen der Kette 5 enden jeweils in Höhe der oberen und unteren Umlenkbereiche der Kette 5.

Die Kette 5 besteht aus einzelnen Kettengliedern 5a und 5b, die über die Trag- und Führungsbolzen 4 miteinander verbunden sind. Die Kettenglieder 5a und 5b sind gleich lang und im wesentlichen gleich ausgebildet. An jedem zweiten Kettenglied 5b ist jedoch ein Tragarm 6 angelenkt, der hier aus zwei Schenkeln 6a und 6b besteht, die gleich lang sind, im Bereich der Enden des Kettengliedes 5b - hier - angeflanscht sind und deren andere Enden gemeinsam eine Buchse 7 tragen, deren Achse parallel zu der Achse der Trag- und Führungsbolzen 4 der Kette 5 ausgerichtet ist. Daraus ergibt sich, daß diese Buchse 7 in der Halbierenden zwischen den zwei Trag- und Führungsbolzen 4 des Kettengliedes 5b angeordnet ist. Die Buchse 7 liegt in jeder Lage des zugeordneten Kettengliedes 5b auf der von der Mittelebene 3 weg gerichteten Seite der Kette 5.

Aus der Zeichnung ist ersichtlich, daß pro - hier ein Fahrzeug 8 aufnehmenden - Speicherplattform 2 jeweils zwei Kettenglieder 5a und 5b vorgesehen sind, sodaß die Länge der einzelnen Kettenglieder 5a und 5b dem halben Abstand zweier übereinander angeordneter Speicherplattformen 2 entspricht.

Die beiden Ketten 5 werden so gehalten und synchron geführt, daß immer ein Tragarm 6 einer Kette 5 mit einem Tragarm 6 der anderen Kette 5 in einer Horizontalen liegt.

Z.B. bei Temperaturschwankungen, je nach Beladungszustand der Speichervorrichtung 1 und durch leichtes Dehnen der Ketten 5 im Laufe der Benutzungszeit kann eine Lägenveränderung der Ketten 5 eintreten. Da die Speichervorrichtung 1 oben be- und entladen wird, ist es nur wesentlich, dafür zu sorgen, daß die Lage der obersten Speicherplattform 2 gleich bleibt. Dies kann dadurch erreicht werden, daß der Antrieb und damit die Abstützung der Kette im oberen Bereich der Speichervorrichtung vorgesehen wird.

Die Speicherplattformen 2 weisen an ihren Längsenden Tragbolzen 9 auf, deren Achsen in der Längsmittelachse der Speicherplattform 2 angeordnet sind. Jeder Tragbolzen 9 ist in der Buchse 7 eines der Tragarme 6 der Kettenglieder 5b drehbar gelagert. Da die Tragarme 6jeweils nach außen gerichtet sind, laufen die Tragbolzen 9 der Speicherplattformen 2 auch außerhalb des Umlaufes der Ketten 5 um.

Dadurch ergibt sich für jeweils eine Speicherplattform 2 eine oberste Stellung, in der diese das oberste Teil der Speichervorrichtung 1 bildet, wie sich aus den Figuren deutlich ergibt. Die Oberfläche dieser Speicherplattform 2, auf der die Fahrzeuge 8 od.dgl. abgestellt werden sollen, steht somit weit über die anderen funktionellen Bauteile der Speichervorrichtung 1 hervor.

Wie auch aus der Zeichnung ersichtlich ist, ist die Oberfläche der obersten Speicherplattform 2 von allen Seiten her unbehindert zugänglich. Der Benutzer findet lediglich einen Raum vor sich, in dem ein im wesentlicher ebener Boden vorhanden ist, der eine bestimmte Fläche aufweist, auf der er sein Fahrzeug abstellen soll.

Durch die Anordnung der Tragbolzen 9 der Speicherplattform 2 und deren Lagerung werden die Speicherplattformen 2 in einem labilen Gleichgewicht gehalten. Dieses Gleichgewicht ist spätestens dann nicht mehr vorhanden, wenn ein Fahrzeug auf der Speicherplattform 2 abgestellt wird.

Um nun die Speicherplattform 2 auf alle Fälle horizontal zu halten, ist - hier - im Bereich jedes Tragbolzens 9 einer Speicherplattform 2 jeweils ein Lenkhebel 10 drehfest angebracht. Hier schließt der Lenkhebel 10 mit der Horizontalen und damit mit der Oberfläche der Speicherplattform 2 einen Winkel von 90° ein, wobei er in der Vertikalen gesehen parallel zu dem Tragarm 6 verläuft.

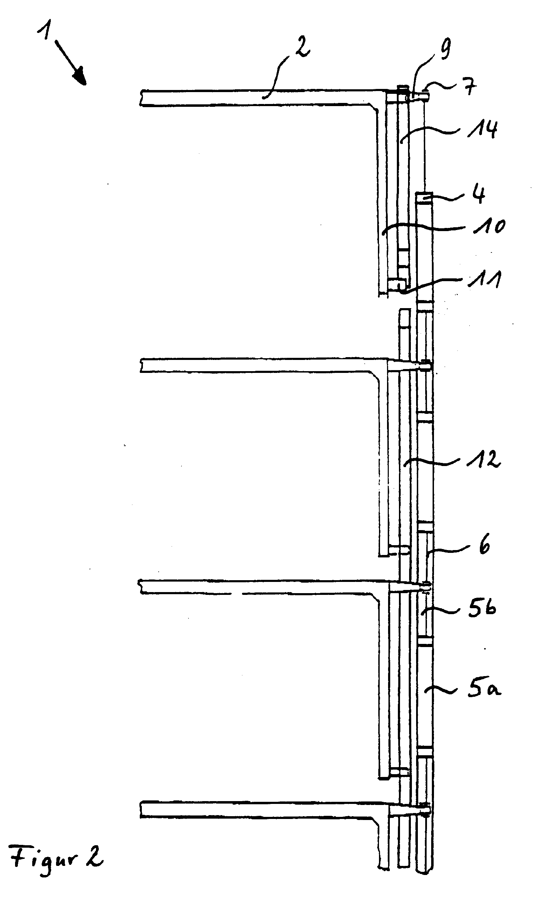

Gemäß der Figur 2 ist der Lenkhebel 10 unmittelbar an der Speicherplattform 2 festgelegt. Der Lenkhebel 10 kann aber auch an dem Tragbolzen 9 mittels eines Keiles drehfest gehalten werden. An dem freien Ende dieses Lenkhebels ist mindestens eine Rolle 11 drehbar angeordnet, deren Drehachse parallel zu den Achsen der Trag- und Führungsbolzen 4 der Kette 5 ausgerichtet ist.

Ist an dem Lenkhebel 10 nur eine Rolle 11 angeordnet, so wird diese Rolle 11 in einer ringförmig geschlossenen stetigen Führung 12 geführt wird. Diese Führung 12 ist auch an den Tragsäulen festgelegt, die auch die Führungen für die Kette 5 tragen. Jede dieser beiden Führungen 12 besitzt zwei vertikale beschnitte, die sowohl oben, als auch unten über einen angenähert halbkreisförmigen beschnitt miteinander verbunden bind. Aufgrund der Geometrie sind diese beschnitte nicht exakt halbkreisförmig gestaltet, da sonst die Speicherplattformen 2 im oberen und unteren Umlenkbereich nicht exakt horizontal geführt würden. Die Kurve dieser Führungen 12 läßt sich jedoch sehr einfach ermitteln.

Die Länge der Lenkhebel 10 ist hier so gewählt, daß sie sich fast bis zu der darunterliegenden Speicherplattform 2 erstrecken, so daß ein möglichst großer Hebelarm erhalten wird. Durch diese Lenkhebel 10, deren an deren freien Enden angebrachten Rollen 11 in Führungen 12 geführt werden, wird das Drehmoment der um die Tragbolzen 9 praktisch drehbaren Speicherplattform 2 aufgenommen und dafür gesorgt, daß die Speicherplattformen 2 in jeder Lage immer horizontal liegen. Dementsprechend muß die Geometrie der Führungen 12 so gewählt werden, daß die Speicherplattformen 2 immer horizontal gehalten werden.

Werden nun die Speicherplattformen 2 im oberen und im unteren Umlenkbereich geführt, so können die Lenkhebel 10 das Drehmoment nicht mehr aufnehmen, da die Rollen 11 im Scheitelpunkt der Führungen 12 zu viel Spiel haben.

An den - hier - vier Ecken der Speicherplattformen 2 sind nun weitere Rollen 13 angeordnet, die im oberen und im unteren Umlenkbereich der Speicherplattformen 2 in zusätzliche Führungen 14 eingeführt werden und dann die horizontale Ausrichtung der Speicherplattformen 2 übernehmen. Diese Führungen 14 bestehen aus zwei etwa viertelkreisförmigen Teilen 14a und 14b, die - hier - über ein horizontales Teilstück 14c miteinander verbunden sind. Dieses horizontale Teilstück 14c ist an seiner den Ketten 5 zugewandten Seite offen, so daß die Rolle nach innen ausweichen kann, jedoch nicht nach außen. Hat dabei die eine Rolle 13 die geschlossene Führung 14a verlassen, so wird die andere Rolle 13 in dem anderen,geschlossenen Teil der Führung 14b schon geführt.

Zur Ausbildung der Baugrube und der Anordnung dieser Speichervorrichtung 1 wird auf die DE-A-3 437 720 und insbesondere die DE-A-3 801 211 verwiesen.

Dies betrifft insbesondere die Abdeckung der Baugrube neben der obersten Speicherplattform 2.

Wenngleich die Antriebseinrichtung der Speichervorrichtung 1 wie bei bekannten Vorrichtungen im unteren Bereich derselben angeordnet sein könnte, empfiehlt es sich, die hier nicht dargestellte Antriebsvorrichtung für die beiden Ketten 5 etwa in Höhe der oberen Umlenkung der Ketten 5 anzuordnen. Insbesondere wird die Wartung derselben dadurch erleichtert, da das Wartungspersonal nicht mehr bis fast auf den Grund der Baugrube hinabsteigen muß. Die Wartung der Kette 5 und der Speicherplattformen 2 kann durch schrittweises Bewegen der Kette 5 und damit der Speicherplattformen 2 im Ein- und Ausfahrtsbereich vorgenommen werden.

Um eine synchrone Bewegung der beiden Ketten 5 zu erhalten, ist entweder nur ein Motor vorgesehen, der über Wellen und Kettentriebe auf beide Ketten 5 einwirkt, oder es ist jeder Kette 5 ein Motor zugeordnet und beide Motoren sind über Wellen und Kettentriebe miteinander synchronisiert. Eine "Synchronisations"-Welle kann in der Mittelebene 3 zwischen den Führungen hindurchgeführt werden.

### Bezugszeichenliste

1 Speichervorrichtung
2 Speicherplattform
3 Mittelebene
4 Trag- und Führungsbolzen
5 Kette
5a "leeres" Kettenglied
5b "tragendes" Kettenglied
6 Tragarm
6a Schenkel des Tragarms
6b Schenkel des Tragarms
7 Buchse
8 Fahrzeug
9 Tragbolzen der Speicherplattform 2
10 Lenkhebel
11 Rolle des Lenkhebels
12 Führung für die Rolle 11
13 Rollen an der Speicherplattform 2
14 Führung für die Rolle 13

## Patentansprüche

1. Vertikale Speichervorrichtung (1), insbesondere für Kraftfahrzeuge, die vorzugsweise in einer Baugrube versenkt ist, mit einem vertikal stehenden, aus zwei miteinander verbundenen, vertikal stehenden Tragsäulen gebildeten Rahmen,
- wobei in jeder Tragsäule jeweils in zwei vertikalen Führungen geführt eine endlose und antreibbare, umlaufende Kette (5) aus einzelnen, jeweils über einen in den Führungen gelagerten Trag- und Führungsbolzen (4) miteinander verbundenen Kettengliedern (5a, 5b) angeordnet ist, die jeweilige Kette (5) sowohl am nach unten offenen Ende, als auch am nach oben offenen Ende der Führungen umlenkbar ist und
- jedes zweite Kettenglied (5b) einen sich von dem Rahmen weg nach außen erstreckenden Tragarm (6) aufweist,
- die beiden Ketten (5) jeweils in gleicher Höhe je einen Tragarm (6) aufweisen,
- - in deren freien Enden jeweils ein Tragbolzen (9) für eine horizontal angeordnete Speicherplattform (2) gelagert ist,
dadurch gekennzeichnet,
- daß jede Speicherplattform (2) zwei Tragbolzen (9) aufweist, die beide in der Längsmittelachse dieser Speicherplattform (2) angeordnet sind und je in dem freien Ende eines Tragarmes (6) einer der beiden Ketten (5) drehbar gelagert sind,
- daß an jeder Speicherplattform (2) mindestens ein nach unten gerichteter Lenkhebel (10) drehfest gegenüber dieser festgelegt ist, der an seinem freien Ende eine Einrichtung zur Aufnahme des Drehmomentes der Speicherplattform (2) zumindest im vertikalen Bereich der Speichervorrichtung (1) aufweist,
- daß an jeder Speicherplattform (2) mindestens in einer Ecke derselben eine Führungsrolle (13) festgelegt ist, und
- daß im oberen und im unteren Umlenkbereich der Ketten (5) jeweils Führungsschienen (14) für die an der Speicherplattform (2) angeordneten Führungsrollen (13) angeordnet sind, die die Speicherplattform (2) horizontal halten.

2. Speichervorrichtung nach Anspruch 1, dadurch gekennzeichnet, daß an mindestens zwei, vorzugsweise an allen vier Ecken der Speicherplattform (2) jeweils eine Führungsrolle (13) angeordnet ist.

3. Speichervorrichtung nach einem der vorhergehenden Ansprüche, dadurch gekennzeichnet, daß die Achsen der Führungsrollen (13) parallel zur Längsachse der Speicherplattform (2) ausgerichtet sind.

4. Speichervorrichtung nach einem der vorhergehenden Ansprüche, dadurch gekennzeichnet, daß im oberen und im unteren Umlenkbereich der Ketten (5) jeweils Führungsschienen (14) für ein Paar von an der Speicherplattform (2) angeordneten Führungsrollen (13) angeordnet sind, die die Speicherplattform (2) horizontal halten.

5. Speichervorrichtung nach einem der vorhergehenden Ansprüche, dadurch gekennzeichnet, daß diese Führungen (14) in ihren Endbereichen mindestens viertelkreisförmig ausgebildet sind und vorzugsweise zwischen sich einen horizontalen Bereich einschließen, in dem die Führungen (14) zumindest auf der den Ketten (5) zugerichteten Seite offen sind.

6. Speichervorrichtung nach einem der vorhergehenden Ansprüche, dadurch gekennzeichnet, daß das freie Ende des Lenkhebels (10) mittig unterhalb der Speicherplattform (2) angeordnet ist.

7. Speichervorrichtung nach einem der vorhergehenden Ansprüche, dadurch gekennzeichnet, daß der Lenkhebel (10) unmittelbar an der Speicherplattform (2) festgelegt ist.

8. Speichervorrichtung nach einem der Ansprüche 1 bis 6, dadurch gekennzeichnet, daß der Lenkhebel (10) drehfest an dem Tragbolzen (9) der Speicherplattform (2) festgelegt ist.

9. Speichervorrichtung nach einem der vorhergehenden Ansprüche, dadurch gekennzeichnet, daß das freie, nach unten gerichtete Ende des Lenkhebels eine Einrichtung aufweist, die mit einer komplementär ausgebildeten Einrichtung an der darunterliegenden Speicherplattform (2) in Eingriff bringbar ist.

10. Speichervorrichtung nach dem vorhergehenden Anspruch, dadurch gekennzeichnet, daß die an dem freien Ende des Lenkhebels angeordnete Einrichtung eine Gabel und die komplementär ausgebildeten Einrichtung an der darunterliegenden Speicherplattform (2) ein Bolzen, vorzugsweise der Tragbolzen der Speicherplattform (2) ist.

11. Speichervorrichtung nach Anspruch 9, dadurch gekennzeichnet, daß die an dem freien Ende des Lenkhebels angeordnete Einrichtung eine Führungsrolle (11) und die komplementär ausgebildeten Einrichtung an der darunterliegenden Speicherplattform (2) eine V-förmige ausgebildete Vertiefung ist, die vorzugsweise in der Speicherplattform (2) ausgebildet ist.

12. Speichervorrichtung nach einem der vorhergehenden Ansprüche, dadurch gekennzeichnet, daß an dem unteren Ende des Lenkhebels mindestens eine Führungsrolle (11) angeordnet ist.

13. Speichervorrichtung nach dem vorhergehenden Anspruch, dadurch gekennzeichnet, daß die eine Rolle (11) des Lenkhebels (10) in vorzugsweise stetigen Führungsschienen (12) geführt wird, die zwei zueinander parallele vertikale Abschnitte aufweisen, die unten und oben jeweils über einen etwa halbkreisförmigen Abschnitt miteinander verbunden sind.

14. Speichervorrichtung nach einem der vorhergehenden Ansprüche 1 bis 11, dadurch gekennzeichnet, daß an dem freien Ende des Lenkhebels (10) ein Querträger angeordnet ist, der an seinen beiden Enden je eine Rolle aufweist, von denen je eine in einer an der jeweiligen Tragsäule festgelegten Führungsschiene (12) geführt ist.

15. Speichervorrichtung nach einem der vorhergehenden Ansprüche, dadurch gekennzeichnet, daß an dem freien Ende des Lenkhebels zwei Rollen (11) angeordnet sind und jeweils eine der beiden Rollen des Lenkhebels (10) in Führungsschienen (12) geführt werden, die jeweils mindestens im oberen und unteren Bereich der Speichervorrichtung (1) zwei zueinander parallele vertikale beschnitte aufweisen, die unten und oben jeweils über einen etwa halbkreisförmigen beschnitt miteinander verbunden sind, der über einen mittigen viertelkreisförmigen beschnitt mindestens auf seiner nach innen gerichteten Seite offen ist.

16. Speichervorrichtung nach einem der vorhergehenden Ansprüche, dadurch gekennzeichnet, daß jeder Tragarm (6) durch zwei Schenkel (6a, 6b) gebildet wird, deren jeder in einem Endbereich eines Kettengliedes (5b) festgelegt ist und deren andere Enden an einer den Tragbolzen (9) der Speicherplattform (2) hältenden Buchse (7) festgelegt sind.

17. Speichervorrichtung nach einem der vorhergehenden Ansprüche, dadurch gekennzeichnet, daß die beiden einen Tragarm (6) bildenden Schenkel (6a und 6b) gleich lang sind, und insbesondere die den Tragbolzen (9) der Speicherplattform (2) haltende Buchse (7) von den beiden Enden des Kettengliedes (5b) gleich weit beabstandet ist.

## Claims

1. Vertical storage device (1), in particular for motor vehicles, which is preferably sunk into an excavated pit, with a vertically upstanding frame formed of two vertically upstanding supporting columns connected together,
- there being arranged in each supporting column respectively guided in two vertical guides an endless driven circulating chain (5), each made up of individual links (5a, 5b) connected together by supporting and guiding pins (4) carried in the guides, the respective chain (5) changing direction both at the lower open ends and also the upper open ends of the guides and
- every second link (5b) having a supporting arm (6) extending outwards away from the frame,
- the two chains (5) each having a respective supporting arm (6) at the same level,
- - in the free end of which there is mounted respectively a supporting pin (9) for a horizontally disposed storage platform (2),
characterised in that,
- each storage platform (2) has two supporting pins (9) which are both arranged on the longitudinal central axis of this platform (2) and each rotatably mounted in a respective free end of a supporting arm (6) of one of the two chains (5),
- there is secured on each storage platform (2) at least one downwardly directed guiding lever (10) secured against rotation and having on its free end a device for taking the tilting moment of the storage platform (2) at least in the vertical part of the storage device (1),
- there is secured to each storage platform (2) at least one guide roller (13) arranged in a corner of it and
- in the upper and lower direction-changing regions of the chains there are arranged respective guide rails (14) for the guide rollers (13) provided on the platform (2) and holding the platform (2) horizontal.

2. Storage device according to claim 1, characterised in that a respective guide roller (13) is arranged at at least two and preferably at all four corners of the storage platform (2).

3. Storage device according to one of the foregoing claims, characterised in that the axes of the guide rollers (13) are directed parallel to the longitudinal axis of the storage platform (2).

4. Storage device according to one of the foregoing claims, characterised in that in the upper and lower direction-changing regions of the chains (5) there are arranged respective guide rails (14) for a pair of guide rollers arranged on the storage platform (2) and serving to keep the platform (2) horizontal.

5. Storage device according to one of the foregoing claims, characterised in that these guides (14) are at least of quadrant shape in their end regions and preferably include a horizontal portion in which the guides (14) are open at least on the side which is towards the chain (5).

6. Storage device according to one of the foregoing claims, characterised in that the free end of the guiding lever (10) is arranged centrally below the storage platform (2).

7. Storage device according to one of the foregoing claims characterised in that the guiding lever (10) is secured directly to the storage platform (2).

8. Storage device according to one of claims 1 to 6 characterised in that the guiding lever 10 is secured against rotation to the supporting pin (9) of the storage platform (2).

9. Storage device according to one of the foregoing claims, characterised in that the free downwardly directed end of the guiding lever has a device which can be brought into engagement with a device of complementary shape on the platform (2) below.

10. Storage device according to the foregoing claim, characterised in that the device arranged on the free end of the guiding lever is a fork and the device of complementary shape on the platform (2) below is a pin, preferably the supporting pin of the storage platform (2).

11. Storage device according to claim 9, characterised in that the device arranged on the free end of the guiding lever is a guide roller (11) and the device of complementary shape on the platform (2) below is a V-shaped recess which is preferably formed in the platform (2).

12. Storage device according to one of the foregoing claims, characterised in that at least one guide roller (11) is arranged on the lower end of the guiding lever.

13. Storage device according to the preceding claim characterised in that the one roller (11) of the guiding lever (10) is guided in preferably fixed guide rails (12) which have two mutually parallel vertical portions connected together at top and bottom by respective approximately semi-circular portions.

14. Storage device according to one of the foregoing claims 1 to 11 characterised in that there is arranged on the free end of the guiding lever (10) a transverse bearer which has a respective roller at each of its ends, one of which is guided in a guide rail (12) secured to the respective supporting column.

15. Storage device according to one of the foregoing claims, characterised in that there are arranged on the free end of the guiding lever two rollers (11) and a respective one of the two rollers on the guiding lever (10) is guided in guide rails (12) which respectively have two mutually parallel vertical portions at least in the upper and lower regions of the storage device (1), joined together at top and bottom by respective approximately semi-circular portions which are open at least on the inwardly directed side over a central quadrant-shaped portion.

16. Storage device according to one of the foregoing claims, characterised in that each supporting arm (6) is formed by two limbs (6a, 6b) each of which is secured in an end region of a chain link (5b) and of which the other ends are secured to a bush (7) holding the supporting pin (9) of the platform (2).

17. Storage device according to one of the foregoing claims, characterised in that the two limbs (6a and 6b) forming a supporting arm (6) are of equal length and in particular the bush (7) which holds the supporting pin (9) of the storage platform (2) is spaced equidistantly from the two ends of the link (5b).

## Revendications

1. Dispositif de stockage vertical (1), notamment pour véhicules, qui est, de préférence, descendu dans une fosse de construction, à bâti disposé verticalement et formé de deux colonnes portantes reliées l'une à l'autre et disposées verticalement,
- dans chaque colonne portante étant disposée, guidée chacune dans deux guides verticaux, une chaîne circulante (5) sans fin et pouvant être entraînée, constituée de maillons de chaîne (5a, 5b) individuels reliés l'un à l'autre par chaque fois un boulon de sup-port et de guidage (4) monté dans les guides, la chaîne (5) en question pouvant changer de direction tant à l'extrémité ouverte vers le bas qu'à l'extrémité ouverte vers le haut des guides, et
- chaque second maillon de chaîne (5b) présentant un bras portant (6) s'étendant vers l'extérieur, en direction opposée au bâti,
- les deux chaînes (5) présentant, chacune, un bras portant (6), chacun au même niveau,
- à l'extrémité libre de chacun desquels étant monté un boulon de support (9) pour une plate-forme de stockage (2) disposée horizontalement,
caractérisé en ce
- que chaque plate-forme de stockage (2) présente deux boulons de support (9) qui sont tous deux disposés sur l'axe moyen longitudinal de cette plate-forme de stockage (2) et sont, chacun, montés de manière rotative dans l'extrémité libre d'un bras portant (6) de l'une des deux chaînes (5),
- que sur chaque plate-forme de stockage (2) est fixé, de manière immobile en rotation par rapport à celle-ci, au moins un levier de direction (10) orienté vers le bas qui présente, à son extrémité libre, un dispositif destiné à absorber le couple de la plate-forme de stockage (2) du moins dans la zone verticale du dispositif de stockage (1),
- qu'à chaque plate-forme de stockage (2) est fixé, au moins dans un coin de celle-ci, un galet de guidage (13), et
- que dans la zone de retournement supérieure et la zone de retournement inférieure des chaînes (5) sont, chaque fois, disposés des rails de guidage (14) pour les galets de guidage (13) disposés sur la plate-forme de stockage (2), lesquels maintiennent la plate-forme de stockage (2) horizontale.

2. Dispositif de stockage suivant la revendication 1, caractérisé en ce qu'à chacun d'au moins deux, de préférence des quatre, coins de la plate-forme de stockage (2) est disposé un galet de guidage (13).

3. Dispositif de stockage suivant l'une des revendications précédentes, caractérisé en ce que les axes des galets de guidage (13) sont orientés parallèlement à l'axe longitudinal de la plate-forme de stockage (2).

4. Dispositif de stockage suivant l'une des revendications précédentes, caractérisé en ce que dans la zone de retournement supérieure et la zone de retournement inférieure des chaînes (5) sont chaque fois disposés des rails de guidage (14) pour une paire de galets de guidage (13) disposés sur la plate-forme de stockage (2), lesquels maintiennent la plate-forme de stockage (2) horizontale.

5. Dispositif de stockage suivant l'une des revendications précédentes, caractérisé en ce que ces guides (14) se présentent, dans leurs zones d'extrémité, au moins en forme de quart de cercle et, de préférence, renferment entre eux une zone horizontale dans laquelle les guides (14) sont ouverts au moins du côté orienté vers les chaînes (5).

6. Dispositif de stockage suivant l'une des revendications précédentes, caractérisé en ce que l'extrémité libre du levier de direction (10) est disposée de manière centrale sous la plate-forme de stockage (2).

7. Dispositif de stockage suivant l'une des revendications précédentes, caractérisé en ce que le levier de direction (10) est fixé directement sur la plate-forme de stockage (2).

8. Dispositif de stockage suivant l'une des revendications 1 à 6, caractérisé en ce que le levier de direction (10) est fixé, de manière immobile en rotation, sur le boulon portant (9) de la plate-forme de stockage (2).

9. Dispositif de stockage suivant l'une des revendications précédentes, caractérisé en ce que l'extrémité libre, orientée vers le bas, du levier de direction présente un dispositif qui peut venir en prise avec un dispositif, se présentant de forme complémentaire, sur la plate-forme de stockage (2) située au-dessous de celui-ci.

10. Dispositif de stockage suivant la revendication précédente, caractérisé en ce que le dispositif disposé à l'extrémité libre du levier de direction est une fourche et le dispositif, se présentant de forme complémentaire, sur la plate-forme de stockage (2) située au-dessous de celui-ci est un boulon, de préférence le boulon portant de la plate-forme de stockage (2).

11. Dispositif de stockage suivant la revendication 9, caractérisé en ce que le dispositif disposé à l'extrémité libre du levier de direction est un galet de guidage (11) et le dispositif, se présentant de forme complémentaire, sur la plate-forme de stockage (2) située au-dessous de celui-ci est un évidement se présentant en forme de V et qui est, de préférence, réalisé dans la plate-forme de stockage (2).

12. Dispositif de stockage suivant l'une des revendications précédentes, caractérisé en ce qu'à l'extrémité inférieure du levier de direction est disposé au moins un galet de guidage (11).

13. Dispositif de stockage suivant la revendication précédente, caractérisé en ce que l'un des galets (11) du levier de direction (10) est guidé dans des rails de guidage (12), de préférence, continus qui présentent deux tronçons verticaux parallèles entre eux qui sont reliés l'un à l'autre, en bas et en haut, par chaque fois un tronçon de forme environ semi-circulaire.

14. Dispositif de stockage suivant l'une des revendications 1 à 11 précédentes, caractérisé en ce qu'à l'extrémité libre du levier de direction (10) est disposée une traverse qui présente, à chacune de ses deux extrémités, un galet, dont l'un est guidé dans un rail de guidage (12) fixé sur la colonne portante correspondante.

15. Dispositif de stockage suivant l'une des revendications précédentes, caractérisé en ce qu'à l'extrémité libre du levier de direction sont disposés deux galets (11) et que, chaque fois, l'un des deux galets du levier de direction (10) est guidé dans des rails de guidage (12) qui présentent, chacun, au moins dans la zone supérieure et la zone inférieure du dispositif de stockage (1), deux tronçons verticaux parallèles entre eux qui sont reliés l'un à l'autre, en bas et en haut, par chaque fois un tronçon de forme environ semi-circulaire qui, par un tronçon central en forme de quart de cercle, est ouvert au moins de son côté orienté vers l'intérieur.

16. Dispositif de stockage suivant l'une des revendications précédentes, caractérisé en ce que chaque bras portant (6) est formé de deux branches (6a, 6b), chacune d'elles étant fixée à une zone d'extrémité d'un maillon de chaîne (5b) et l'autre extrémité de celles-ci étant fixée à une douille (7) maintenant le boulon portant (9) de la plate-forme de stockage (2).

17. Dispositif de stockage suivant l'une des revendications précédentes, caractérisé en ce que les deux branches (6a et 6b) formant un bras portant (6) sont de même longueur et, en particulier, que la douille (7) maintenant le boulon portant (9) de la plate-forme de stockage (2) est équidistante des deux extrémités du maillon de chaîne (5b).
